(19) Europäisches Patentamt
European Patent Office
Office européen des brevets

(11) EP 1 883 655 B1

(12) FASCICULE DE BREVET EUROPEEN

(45) Date de publication et mention de la délivrance du brevet:
**16.03.2011 Bulletin 2011/11**

(21) Numéro de dépôt: **06794458.7**

(22) Date de dépôt: **24.05.2006**

(51) Int Cl.:
***C08F 2/14*** *(2006.01)* ***C03C 25/28*** *(2006.01)*
***C08F 283/12*** *(2006.01)* ***C09D 151/00*** *(2006.01)*
***C09D 151/08*** *(2006.01)*

(86) Numéro de dépôt international:
**PCT/FR2006/050478**

(87) Numéro de publication internationale:
**WO 2007/003822 (11.01.2007 Gazette 2007/02)**

# (54) DISPERSION DE POLYMERE DANS UN MILIEU ORGANIQUE REACTIF, PROCEDE DE PREPARATION ET UTILISATIONS

POLYMERDISPERSION IN EINEM REAKTIVEN ORGANISCHEN MEDIUM, VERFAHREN ZU IHRER HERSTELLUNG SOWIE VERWENDUNGEN

POLYMER DISPERSION IN A REACTIVE ORGANIC MEDIUM, PREPARATION METHOD AND USES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **26.05.2005 FR 0551386**

(43) Date de publication de la demande:
**06.02.2008 Bulletin 2008/06**

(73) Titulaire: **Saint-Gobain Technical Fabrics Europe**
**73000 Chambéry (FR)**

(72) Inventeurs:
- **RIESS, Gérard**
**F-68200 Mulhouse (FR)**
- **DELAITE, Christelle**
**F-68720 Foreningen (FR)**
- **HARIRI, Kamal**
**F-68200 Mulhouse (FR)**
- **MOIREAU, Patrick**
**F-73190 Curienne (FR)**

(74) Mandataire: **Jamet, Vincent**
**Saint-Gobain Recherche**
**Département Propriété Industrielle**
**39 Quai Lucien Lefranc**
**93300 Aubervilliers (FR)**

(56) Documents cités:
**EP-A- 0 308 139** **EP-A- 0 933 343**
**US-A- 4 810 763** **US-A- 4 885 350**
**US-A- 5 882 792** **US-A1- 2003 018 152**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

L'invention se rapporte à une dispersion de polymère dans un milieu organique réactif obtenue par polymérisation en dispersion par voie radicalaire.

Les polymères en solution ou en suspension sont largement utilisés, notamment dans le domaine des fils de verre destinés au renforcement de matières organiques du type polymère, pour réaliser des compositions d'ensimage ou d'apprêt.

Les fils de verre utilisés pour le renforcement en général sont élaborés industriellement à partir de filets de verre fondu s'écoulant des multiples orifices d'une filière. Ces filets sont étirés mécaniquement sous la forme de filaments continus, puis sont rassemblés en fils de base qui sont ensuite collectés, par exemple par bobinage sur un support en rotation. Avant leur rassemblement, les filaments sont revêtus d'une composition d'ensimage par passage sur un dispositif adapté tel que des rouleaux d'enduction.

La composition d'ensimage est essentielle pour la fabrication des fils de verre et pour l'obtention des matériaux composites incorporant ces fils.

Lors de la fabrication du fil, la composition d'ensimage protège les filaments de verre de l'abrasion qui se produit lorsque ces derniers frottent à grande vitesse sur les différents organes de guidage et d'assemblage, et donne de la cohésion au fil en liant les filaments entre eux.

Lors de la fabrication des matériaux composites, la composition d'ensimage permet l'imprégnation du fil par la matrice à renforcer d'une part, et améliore l'adhésion entre le verre et ladite matrice, d'autre part, contribuant ainsi à obtenir de meilleures propriétés mécaniques.

Les fils de verre peuvent être utilisés tels quels ou être assemblés préalablement à leur incorporation dans la matrice à renforcer, par exemple sous forme de tissus utilisés notamment pour le renforcement de matrices polymériques ou de grilles lorsqu'il s'agit de renforcer des matrices non polymériques. Dans ce cas, il est nécessaire d'appliquer sur la grille un apprêt (« coating » en anglais) qui lui permet de résister aux manipulations et de conserver intacte sa structure jusqu'au stade final de la mise en oeuvre.

Les solutions, émulsions et dispersions de polymères à disposition pour réaliser des compositions d'ensimage ou d'apprêt sont très majoritairement à base d'eau ou de solvant(s) organique(s) volatil(s).

Or, la présence d'eau ou de solvant organique dans l'ensimage ou l'apprêt a une incidence néfaste sur la qualité du renforcement dans le matériau composite et doit par conséquent être évitée.

L'eau est éliminée par séchage dans des conditions qui varient selon que la composition mise en oeuvre est un ensimage ou un apprêt :

- dans le cas d'un ensimage, le séchage est opéré à une température variant généralement de 100 à 130°C pendant une durée qui dépend de la présentation du fil : de quelques secondes pour des fils coupés à quelques heures pour des enroulements de fils (« rovings »). L'étape de séchage des rovings est effectuée dans des installations spécifiques de grande capacité et de ce fait elle représente une part importante du coût de production du fil.
- dans le cas d'un apprêt, le séchage est effectué sur la ligne de production à une température qui varie de 130 à 250°C, notamment avec de l'air chaud ou un rayonnement infrarouge, pendant une durée n'excédant pas quelques minutes, de préférence 1 à 5 minutes.

Le séchage est l'étape importante du procédé qui a une incidence directe sur la vitesse de la ligne de fabrication. Si le séchage est opéré trop rapidement, par exemple à une température élevée pour réduire la durée, un cloquage (« blistering ») de la composition peut survenir à la surface des fils.

Certaines compositions nécessitent d'avoir recours à des solvants organiques pour solubiliser et/ou disperser et/ou mettre en émulsion tout ou partie des constituants. Les solvants peuvent être utilisés seuls ou ajoutés aux solutions, émulsions et dispersions aqueuses pour améliorer leurs propriétés, par exemple pour réduire la viscosité afin de permettre une meilleure pénétration entre les filaments constitutifs du fil de verre. L'utilisation de solvants organiques, généralement volatils pour les éliminer plus facilement, impose de prendre des précautions supplémentaires du fait de leur inflammabilité plus élevée et du risque plus important pour la santé des personnes qui manipulent l'ensimage ou l'apprêt sur la ligne de fabrication. En outre, il est nécessaire de disposer d'installations de traitement en continu des effluents pour réduire au minimum leur rejet dans l'atmosphère. La réglementation en matière de rejet devenant de plus en plus contraignante, le coût de traitement tant au niveau des installations elles-mêmes que de leur fonctionnement ne cesse d'augmenter.

Même si les solutions, émulsions et dispersions disponibles sur le marché sont relativement concentrées en polymère (40 à 80 % en poids), elles contiennent encore de l'eau et/ou des solvants organiques si bien que l'étape de séchage ne peut pas être évitée.

La présente invention a pour but de fournir une dispersion de polymère exempte d'eau et de solvant organique volatil apte à être utilisée dans une composition d'ensimage pour fils de verre ou une composition d'apprêt pour des fils de verre et des assemblages de tels fils.

Un autre but de l'invention est de fournir une dispersion de polymère à teneur élevée en polymère qui reste stable dans les conditions de stockage habituelles.

Ces buts sont atteints par la dispersion selon l'invention qui comprend le produit de polymérisation d'au moins un monomère vinylique en présence d'un amorceur radicalaire dans un milieu de dispersion organique réactif choisi parmi les silicones comprenant au moins un groupe epoxy, de préférence au moins deux, en position(s) terminale(s).

Selon l'invention, on forme un latex organique composé d'un polymère résultant de la polymérisation *in situ* d'un ou plusieurs monomères vinyliques aptes à polymériser par voie radicalaire, ce polymère étant dispersé dans le milieu organique renfermant un ou plusieurs groupes epoxy pouvant réagir avec d'autres composés dans une étape ultérieure . Dans certains cas, une faible proportion de monomère(s) vinylique(s) pouvant aller jusqu'à 10 %, est susceptible de réagir avec le milieu organique réactif en donnant un produit greffé qui aide à la dispersion du polymère.

La dispersion conforme à l'invention est obtenue dès lors que l'écart entre le paramètre de solubilité du polymère ($\delta t_p$) et le paramètre de solubilité du milieu de dispersion ($\delta t_m$) est suffisant pour permettre la formation d'un système biphasique. En règle générale, la dispersion est obtenue lorsque la relation suivante est satisfaite :

$$|\delta t_p - \delta t_m| \geq 4, \text{ de préférence } \geq 5$$

La dispersion est préparée selon le procédé qui comprend une étape de mélange d'au moins un monomère vinylique, de l'amorceur radicalaire et du milieu de dispersion organique réactif, et une étape de réaction du mélange à une température d'au moins 20°C et inférieure au point d'ébullition du composé du mélange ayant le point d'ébullition le plus bas. Le monomère vinylique est choisi parmi les monomères de formule

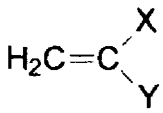

dans laquelle

- X est un radical alkyle en $C_1$-$C_{18}$, un radical aryle, de préférence phényle, pouvant comprendre un ou plusieurs substituants alkyle en $C_1$-$C_4$, de préférence tolyle, ou un radical arylalkyle en $C_7$-$C_{10}$, de préférence benzyle, et Y représente un atome d'hydrogène ou un radical alkyle en $C_1$-$C_4$
- X est le groupe OR dans lequel R représente un radical alkyle en $C_1$-$C_{18}$ ou un radical cycloalkyle en $C_5$-$C_8$, ou un radical de formule

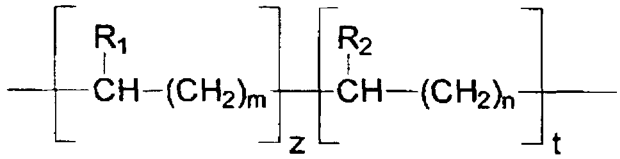

  dans laquelle
  $R_1$ et $R_2$ représentent un atome d'hydrogène, un radical méthyle ou un radical éthyle, $R_1$ et $R_2$ étant différents,
  m et n, identiques ou différents, sont égaux à 1, 2, 3 ou 4, de préférence 3 ou 4,
  z et t, identiques ou différents, sont supérieurs à 4,
  z+t est inférieur ou égal à 80,
  et Y représente un atome d'hydrogène ou un radical alkyle en $C_1$-$C_4$
- X est le groupe $OCOR_1$ dans lequel $R_1$ représente un radical alkyle en $C_1$-$C_{12}$, de préférence en $C_1$-$C_4$, un radical cycloalkyle en $C_5$-$C_8$, de préférence cyclohexyle, ou un radical aryle, de préférence phényle, et Y représente un atome d'hydrogène,
- X est le groupe $COOR_2$ dans lequel $R_2$ représente un radical alkyle en $C_4$-$C_{20}$, un radical cycloalkyle en $C_6$-$C_{20}$, de préférence en $C_4$-$C_{12}$, un radical aryle, de préférence phényle, ou un radical arylalkyle en $C_6$-$C_{20}$, de préférence benzyle et Y représente un atome d'hydrogène ou un radical méthyle,
- X est le groupe de formule

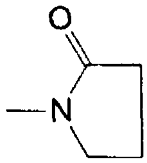

ou

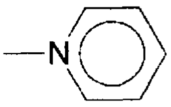

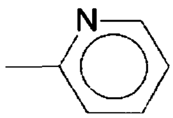

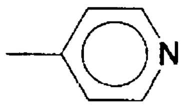

et Y représente un atome d'hydrogène.

De préférence, le monomère vinylique est choisi parmi l'acétate de vinyle, le propionate de vinyle, l'acrylate de butyle, l'acrylate d'octyle, l'acrylate de lauryle et la N-vinyl pyrrolidone. De manière particulièrement préférée, le monomère vinylique est l'acétate de vinyle, l'acrylate de butyle, l'acrylate d'octyle ou la N-vinyl pyrrolidone.

L'amorceur radicalaire peut être tout type connu d'amorceur permettant d'initier la réaction de polymérisation par voie radicalaire, pouvant être activé par voie thermique ou par rayonnement ultraviolet. De préférence, l'amorceur est activable thermiquement, c'est-à-dire qu'il peut libérer des radicaux à la température de réaction, de préférence à une température inférieure d'au moins 10°C inférieure au point d'ébullition du composé du mélange ayant le point d'ébullition le plus bas. En règle générale, il est nécessaire que l'amorceur soit soluble préférentiellement dans le(s) monomère(s) vinylique(s) à polymériser, c'est-à-dire que le coefficient de partage entre les constituants du mélange soit favorable au(x)dit(s) monomère(s). A titre d'exemple de tels amorceurs, on peut citer les peroxydes, les hydroperoxydes, seuls ou combinés avec un agent réducteur de type $Fe^{II}$, $Co^{II}$ ou acide ascorbique (amorceurs redox), et les composés azoïques. De préférence, on choisit le peroxyde de benzoyle, le peroxyde de lauryle, le 2,2'-azo-bis-isobutyronitrile, le 2,2'-azo-bis-méthyl-butyronitrile et le 4,4'-azo-bis-acide cyanopentanoïque, et avantageusement le peroxyde de lauryle, le 2,2'-azo-bis-isobutyronitrile et 2,2'-azo-bis-méthylbuty-ronitrile.

L'amorceur radicalaire est introduit à raison de 0,5 à 6 % en poids de monomère vinylique, de préférence 1 à 4 %, avantageusement 1 à 3 %.

Le milieu de dispersion organique est choisi parmi les silicones comprenant au moins un groupe epoxy, de préférence au moins deux, en position(s) terminale(s), par exemple les poly(alkylsiloxanes) à terminaison(s) glycidyle. Les silicones présentant une masse moléculaire comprise entre 450 et 4000, de préférence entre 600 et 3000 sont avantageux car ils permettent une bonne solubilisation ou dispersion du monomère vinylique sans augmenter de manière trop importante la viscosité de la composition.

De préférence, le silicone répond à la formule

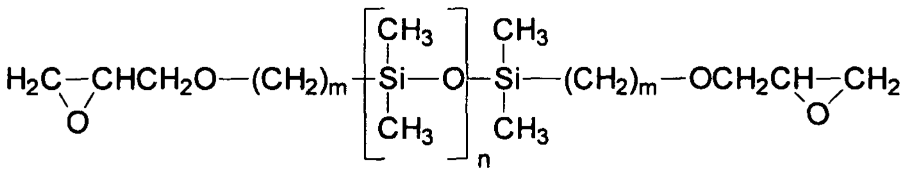

dans laquelle
n varie de 3 à 45, de préférence 10 à 30
m varie de 1 à 20.

Avantageusement, le milieu de dispersion est un α,ω-diglycidyl-polydiméthylsiloxane ayant de préférence une masse moléculaire de l'ordre de 2000 ou l'éthylène glycol.

Le cas échéant, lorsque la viscosité du milieu de dispersion est élevée, on peut ajouter une faible proportion d'un composé organique qui joue le rôle de diluant, à savoir qu'il n'est pas apte à réagir avec le monomère vinylique et avec le milieu de dispersion, mais peut éventuellement polymériser. Le diluant est par exemple choisi parmi les éthers d'alcools gras renfermant au plus 20 atomes de carbone, de préférence compris entre 6 et 18 atomes de carbone et avantageusement entre 8 et 16 atomes de carbone, en particulier les monoglycidyl éthers et les diglycidyl éthers de ces alcools gras.

De manière générale, la proportion de diluant n'excède pas 30 % en poids du milieu de dispersion, et de préférence demeure inférieure à 15 %.

Dans le mélange, le monomère vinylique et le milieu de dispersion sont mis en oeuvre dans un rapport volumique qui n'excède pas 70:30 afin d'éviter une inversion de phase du monomère dans le milieu de dispersion. De préférence, le rapport est compris entre 60:40 et 30:70.

Comme cela a déjà été mentionné, la réaction de polymérisation est effectuée à une température d'au moins 20°C et inférieure au point d'ébullition du composé du mélange ayant le point d'ébullition le plus bas. Les conditions de la réaction, en particulier la température et la durée, varient en fonction du taux de conversion du monomère vinylique souhaité, du polymère final, de la nature et du taux d'amorceur. En général, la polymérisation est effectuée à une température supérieure ou égale à 40°C et inférieure d'au moins 10°C au point d'ébullition du monomère ayant le point d'ébullition le plus bas, de préférence n'excédant pas 60°C, pendant une durée qui varie entre 30 minutes et un dizaine d'heures, de préférence inférieure à 6 heures. Ces conditions de polymérisation permettent d'obtenir un taux de conversion du monomère vinylique supérieur à 80 %, de préférence supérieur à 85%.

Selon une variante de réalisation utilisant un amorceur redox tel que défini précédemment, la température de réaction n'excède pas 40°C, de préférence n'excède pas 30°C.

Le cas échéant, la teneur en monomère vinylique résiduel peut être réduite en augmentant la durée de la réaction ou en ajoutant une quantité supplémentaire d'amorceur radicalaire en fin de réaction plutôt que d'augmenter la température pouvant conduire à l'évaporation du monomère vinylique résiduel.

Dans la dispersion obtenue, le polymère se trouve dispersé directement dans le milieu organique réactif, ce qui permet d'éviter l'étape intermédiaire d'élimination du solvant comme cela est nécessaire avec les dispersions connues.

Le polymère se trouve sous la forme de fines particules sensiblement sphériques, de taille inférieure à 40 μm, de préférence inférieure ou égale à 15 μm, et mieux encore inférieure à 3 μm, qui forment une dispersion stable dans le milieu de dispersion même pour une teneur en polymère élevée. Ces particules présentent aussi une distribution en taille étroite, centrée sur un diamètre moyen compris entre 0,05 et 3 μm.

La combinaison de la taille et de la distribution des particules précitées contribue à l'obtention d'une dispersion stable renfermant 20 à 70 % en poids de polymère, de préférence 30 à 60 % et mieux encore 40 à 60 %.

La viscosité de la dispersion est généralement inférieure ou égale à 500 000 mPa.s., mais elle peut être adaptée en fonction de l'application visée, par exemple en ajustant notamment la quantité de monomère vinylique dans le mélange de départ, la viscosité du milieu de dispersion organique réactif, la masse moléculaire du polymère et la taille des particules.

Ainsi, la viscosité est généralement choisie inférieure à 2000 mPa.s, de préférence est comprise entre 50 et 1000 mPa.s pour l'obtention d'un apprêt, et inférieure à 250 mPa.s., de préférence de l'ordre de 30 à 150 mPa.s pour un ensimage.

La dispersion peut comprendre en outre un agent de stabilisation qui aide à une meilleure dispersion des particules de polymère dans le milieu réactif et permet d'éviter une décantation pendant le stockage. L'agent de stabilisation présente en général une structure comprenant au moins une partie ayant une affinité avec les particules de polymère et au moins une partie présentant une affinité avec le milieu organique réactif.

L'agent de stabilisation peut être choisi parmi :

- les copolymères d'oxyde d'alkylène, par exemple les copolymères d'oxyde d'éthylène et d'oxyde de propylène, notamment sous forme de copolymères diblocs ou triblocs. Avantageusement, les copolymères sont des copolymères diblocs poly(oxyde d'éthylène)-poly(oxyde de propylène). Ces copolymères peuvent être greffés et les groupements pendants peuvent renfermer une ou plusieurs fonctions carboxyliques ou sulfoniques,
- les polymères d'oxyde d'alkylène et d'au moins un autre monomère polymérisable, par exemple le styrène et l'acrylate ou le méthacrylate d'alkyle, en particulier de méthyle. Avantageusement, on utilise des copolymères blocs poly(oxyde d'éthylène)-poly(méthacrylate de méthyle) et poly(oxyde d'éthylène)-polystyrène,
- les polymères d'alcool vinylique, de préférence ayant une masse moléculaire comprise entre 3 000 et 250 000, avantageusement entre 10000 et 200000 et mieux encore entre 25000 et 150000. Ces polymères sont notamment obtenus par hydrolyse des poly acétates de vinyle correspondant, le taux d'hydrolyse étant en généralement inférieur ou égal à 98 %.
- les polymères de silicone, par exemple les poly(alkylsiloxanes) tels que les polydiméthylsiloxanes à terminaison(s) acrylique ou méthacrylique, et les polydiméthylsiloxanes greffés par un poly(oxyde d'alkylène), en particulier un poly(oxyde d'éthylène).

L'agent de stabilisation peut être ajouté dans le mélange des réactifs de départ dans une proportion pouvant aller jusqu'à 35 % en poids de monomère vinylique, de préférence jusqu'à 20 %.

Il a été constaté de manière tout à fait inattendue que la polymérisation de monomère(s) vinylique(s) de type

acétate de vinyle dans le milieu de dispersion renfermant des fonctions epoxy, notamment glycidyles, peut se faire sans l'ajout d'un agent de stabilisation du polymère. Il semblerait que l'acétate de vinyle puisse réagir avec la ou les fonctions epoxy, notamment glycidyles, du milieu de dispersion dans les conditions de la polymérisation, en formant un composé jouant le rôle de stabilisant. Le fait que ce composé soit formé *in situ* dans le milieu de dispersion pendant le déroulement de la polymérisation est particulièrement avantageux car il évite d'avoir à ajouter un agent de stabilisation externe.

La dispersion de polymère conforme à l'invention peut être stockée dans des conditions habituelles de manière satisfaisante pendant plusieurs jours, voire plusieurs mois, en général de 3 à 6 mois à une température variant de 20 à 25°C, avec un niveau acceptable de sédimentation des particules.

La dispersion conforme à l'invention présente les avantages suivants :

- elle ne contient pas d'eau et par conséquent on évite l'étape de séchage consommatrice en énergie,
- elle ne contient pas de solvant volatil et les risques d'émissions polluantes préjudiciables à l'environnement et à la santé des opérateurs sont fortement réduits,
- la teneur en monomère vinylique résiduel est très faible, inférieure à 10 % du poids de la dispersion, de préférence inférieure à 5 %,
- la teneur en polymère dans la dispersion est élevée ce qui permet d'avoir des installations de stockage de faible volume.

La dispersion selon l'invention peut être utilisée comme cela a déjà été indiqué pour préparer des compositions d'ensimage ou d'apprêt.

L'expression « composition d'ensimage » a la signification habituellement admise dans le domaine des fils de verre : elle désigne une composition apte à être déposée sur des filaments de verre en cours d'étirement, avant leur rassemblement en un ou plusieurs fils de base. La composition d'ensimage sert à protéger les filaments de verre de l'abrasion lors de la fabrication du fil, et à améliorer l'imprégnation du fil par la matrice à renforcer et le couplage entre le verre et ladite matrice.

L'expression « composition d'apprêt » désigne une composition pouvant être appliquée sur le fil de verre à différents stades du procédé après fibrage, par exemple des fils provenant d'enroulements (« rovings »), ou sur un assemblage de tels fils, entrelacés ou non, par exemple un tissu, un tricot, une grille ou un mat. L'apprêt a pour rôle de lier les fils entre eux et d'améliorer leur résistance lors de leur utilisation finale.

De manière classique, la préparation de ces compositions est effectuée en ajoutant à la dispersion des additifs spécifiques, notamment au moins un composé pouvant réagir avec les fonctions réactives epoxy du milieu de dispersion, tels que les composés aminés et les isocyanates. On peut encore ajouter des composés cycloepoxyde pouvant réagir sous l'effet du rayonnement ultraviolet par catalyse de type acide de Lewis à partir de composés tels que le triarylsulfonium hexafluorure d'antimoine, le triarylsulfonium hexafluorophosphate d'antimoine, le triarylsulfonium tétrafluoroborate d'antimoine, le diaryliodonium hexafluorure d'antimoine et les dérivés de type ferrocène.

La composition d'ensimage est appliquée sur des filaments de verre de toute nature, par exemple E, C, AR (alcali-résistant), ou à bas taux de bore (moins de 5 %). On préfère le verre E et le verre à bas taux de bore.

Ces filaments possèdent un diamètre pouvant varier dans une large mesure, par exemple 5 à 24 μm, de préférence 9 à 17 μm. Le fil de verre final a généralement un titre compris entre 10 et 4800 tex, de préférence 68 à 2400 tex.

La composition d'apprêt est quant à elle appliquée sur un fil de verre ou sur un assemblage de tels fils, notamment sous forme de grille ou de tissu, par exemple par pulvérisation ou immersion dans un bain.

Les fils de verre revêtus de l'ensimage et les fils ou les assemblages de tels fils de verre traités avec l'apprêt sont soumis à un traitement, par exemple thermique ou sous radiations ultraviolettes, afin d'obtenir fa réticulation de l'ensimage ou de l'apprêt.

Les exemples qui suivent permettent d'illustrer l'invention sans toutefois la limiter.

## EXEMPLES

Dans un réacteur équipé d'un agitateur mécanique, d'un dispositif réfrigérant à circulation d'eau, d'un système assurant une circulation d'azote et d'un bain d'huile, on introduit le monomère vinylique, le milieu de dispersion organique réactif, l'amorceur radicalaire et le cas échéant l'agent de stabilisation.

Le mélange réactionnel est chauffé à une température inférieure de 10°C au point d'ébullition du monomère vinylique pendant 7 heures sous agitation (150 RPM).

On utilise les composés suivants dans les teneurs indiquées dans le tableau 1 :

Monomère vinylique

- VAC : acétate de vinyle

- VP : N-vinyl pyrrolidone
- AB : acrylate de butyle
- AO : acrylate d'octyle

Milieu de dispersion

- PDMS-DG : $\alpha,\omega$-diglycidyl polydiméthylsiloxane (masse moléculaire moyenne en poids (MW) : 2500); commercialisé par GOLDSCHMIDT sous la référence TEGOMER E-SI 2330

Amorceur radicalaire :

- AACP : 4,4'-azo-bis-acide cyanopentanoïque
- AIBN : 2,2'-azo-bis-isobutyronitrile
- AMBN : 2,2'-azo-bis-méthyl-butyronitrile ; commercialisé par DuPont sous la référence VAZO® 67
- PB : peroxyde de benzoyle
- PL : peroxyde de lauryle

Agent de stabilisation

- PDMS-MA : polydiméthylsiloxane à terminaisons méthacrylique ; commercialisé par SHIN-ETSU sous la référence X22-174DX (masse moléculaire moyenne en poids (MW) : 4600)
- PDMSgPOE : polydiméthylsiloxane greffé poly(oxyde d'éthylène) ; commercialisé par GOLDSCHMIDT sous la référence TEGOPREN 5842
- PMMA-POE : copolymère bloc poly(méthacrylate de méthyle)-poly(oxyde d'éthylène) ; commercialisé par GOLDSCHMIDT sous la référence ME
- PS-POE : copolymère bloc polystyrène-poly(oxyde d'éthylène) ; commercialisé par GOLDSCHMIDT sous la référence SE
- PVAL : polyalcool vinylique dérivé de polyacétate de vinyle (taux d'hydrolyse : 88 % ; masse moléculaire : 88000) ; commercialisé par GOHSENOL sous la référence GL 05.

Diluant

- LA-MG : monoglycidyl éther d'alcool laurique ; commercialisé par HUNSTMAN CHEMICALS sous la référence ARALDITE® DY0391

A partir de la dispersion obtenue, on effectue les mesures suivantes :

- la taille moyenne des particules de polymère, exprimé en nanomètres, est mesuré par spectroscopie à corrélation de photons sous un faisceau incident de lumière laser et mesure de la lumière diffusée sous un angle de 90° à l'aide d'un appareil COULTER N4 PLUS (pour les tailles jusqu'à 3000 nm) et d'un appareil LS 230 pour les tailles jusqu'à $2 \times 10^6$ nm).
- la viscosité, en mPa.s, est mesurée à 25 °C à l'aide d'un viscosimètre rotatif (RHEOMAT RM 180).
- la stabilité est mesurée en donnant le temps de sédimentation en conditions statiques correspondant à une décantation de 25 % en volume de la dispersion ($t_{25}$ exprimé en jour).
- le taux de conversion du(des) monomère(s) vinylique(s) est mesuré par $^1$H-RMN.

Dans le tableau 1, on constate que les dispersions de poly(acétate de vinyle) sont stables sans l'ajout d'un agent stabilisant pendant au moins 30 jours (Ex. 6 à 8) et plus de 60 jours à une teneur en polymère plus faible (Ex. 1 à 5). Pour les dispersions plus concentrées, l'ajout d'un agent de stabilisation est nécessaire pour obtenir une stabilité d'au moins 8 jours (Ex. 30 à 32). Le taux de conversion du monomère vinylique est au moins égal à 90 %.

L'ajout d'agent de stabilisation dans les dispersions de polymère de vinylpyrrolidone et d'acryliques permet d'obtenir des particules de faible taille (inférieure à 1 $\mu$m) et permet d'augmenter la durée du stockage (Ex. 9 et 10 ; Ex. 23 et 24).

Le paramètre de solubilité du polymère ($\delta t_p$) et le paramètre de solubilité du milieu de dispersion ($\delta t_m$) sont calculés selon la méthode décrite par D. W. VAN KREVELEN dans l'ouvrage « Properties of polymers » ; Elsevier Science Publisher, 1990, pp. 212-213. On donne ci-après l'écart $|\delta t_p - \delta t_m|$ pour les exemples du tableau 1 :

| | $\lvert\delta t_p - \delta t_m\rvert$ |
|---|---|
| Exemples 1-8 et 30-32 | 6,8 |
| Exemples 9-11 et 25 | 7,0 |
| Exemples 12 à 25 | 5,7 |

Tableau 1

| Ex. | Monomère vinylique/ milieu dispersion (volume/ volume) | Amorceur radicalaire (% poids/ monomère vinylique) | Agent de stabilisation (% poids/ monomère vinylique) | Taille moyenne (nm) | Viscosité (mPa.s) | Stabilité $t_{25}$ (jour) |
|---|---|---|---|---|---|---|
| 1 | VAC/ PDMS-DG 20/80 | PL 2 % | - | 684 | 86 | > 60 |
| 2 | VAC/ PDMS-DG 20/80 | PL 4 % | - | 524 | 92 | > 60 |
| 3 | VAC/ PDMS-DG 20/80 | AIBN 2 % | - | n. d. | 88 | > 60 |
| 4 | VAC/ PDMS-DG 20/80 | AIBN 4 % | - | 553 | 93 | > 60 |
| 5 | VAC/ PDMS-DG 20/80 | PB 4 % | - | 345 | n. d. | > 60 |
| 6 | VAC/ PDMS-DG 30/70 | PL 2 % | - | 614 | 143 | > 30 |
| 7 | VAC/ PDMS-DG 30/70 | AIBN 2 % | - | 807 | 140 | > 30 |
| 8 | VAC/ PDMS-DG 30/70 | PB 2 % | - | 633 | 145 | > 30 |
| 9 | VP/PDMS-DG 20/80 | PL 2 % | - | 5600 | 85 | 15 |
| 10 | VP/PDMS-DG 20/80 | PL 2 % | PDMS-MA 15 % | 170 | 85 | > 60 |
| 11 | VP/PDMS-DG 30/70 | PL 2 % | PDMS-MA 10 % | 235 | 100 | > 30 |
| 12 | AB/PDMS-DG 20180 | PL 2 % | - | n. d. | n. d. | 1 |
| 13 | AB/PDMS-DG 20/80 | PB 2 % | - | n. d. | n. d. | 1 |
| 14 | AB/PDMS-DG 20/80 | AIBN 2 % | | n. d. | n. d. | 1 |

(suite)

| Ex. | Monomère vinylique/ milieu dispersion (volume/ volume) | Amorceur radicalaire (% poids/ monomère vinylique) | Agent de stabilisation (% poids/ monomère vinylique) | | | Taille moyenne (nm) | Viscosité (mPa.s) | Stabilité $t_{25}$ (jour) |
|---|---|---|---|---|---|---|---|---|
| 15 | AB/PDMS-DG 20/80 | AIBN 4 % | PDMSgPOE 10 % | | | n. d. | n. d. | 4 |
| 16 | AB/PDMS-DG 20/80 | PL 2 % | PMMA-POE 5 % | | | n. d. | n. d. | 3 |
| 17 | AB/PDMS-DG 20/80 | PL 2 % | PMMA-POE 10 % | | | n. d. | n. d. | 5 |
| 18 | AB/PDMS-DG 20/80 | AIBN 2 % | PMMA-POE 20 °lo | | | n. d. | n. d. | 9 |
| 19 | AB/PDMS-DG 20/80 | AIBN 3 % | PDMSgPOE 10 % | | | n. d. | n. d. | 3 |
| 20 | AB/PDMS-DG 20/80 | AIBN 3 % | PS-POE 20 % | | | n. d. | n. d. | 2 |
| 21 | AB/PDMS-DG 20/80 | AIBN 3 % | PDMSgPOE 20 % | | | n. d. | n. d. | 2 |
| 22 | AB/PDMS-DG 20/80 | AIBN 1 % | PDMS-MA 10 % | | | 500 | 130 | > 60 |
| 23 | AB/PDMS-DG 20/80 | AIBN 3 % | PDMS-MA 15 % | - | n. d. | 700 | 95 | > 90 |
| 24 | AB/PDMS-DG 20/80 | AIBN 3 % | - | - | n. d. | 1600 | 95 | 1 |
| 25 | AB/PDMS-DG 30/70 | AIBN 3 % | PDMS-MA 15 % | - | n. d. | 100 | n. d. | > 60 |
| 26 | AO/PDMS-DG 20/80 | PL 1 % | - | - | n. d. | n. d. | n. d. | 1 |
| 27 | AO/PDMS-DG 20/80 | PL 2 % | - | - | n. d. | n. d. | n. d. | 1 |
| 28 | AO/PDMS-DG 20/80 | PB 2 % | - | - | n. d. | n. d. | n. d. | 1 |
| 29 | AO/PDMS-DG 20/80 | PL 2 % | PDMS-MA 15 % | - | n. d. | 300 | 135 | > 14 |
| 30 | VAC/ PDMS-DG 70/30 | AMBN 2 % | PDMS-MA 5 % | LA-MG 10 % | 98,3 | 1000 (52 %) + 15820 (48 %)* | 20250 | >30 |
| 31 | VAC/ PDMS-DG 50/50 | AMBN 2 % | PDMS-MA 5 % | - | 98,5 | 900 (70 %) + 19700 (30 %) | 3770 | 8 |
| 32 | VAC/ PDMS-DG 50/50 | AIBN 3 % | PDMS-MA 10 % | - | 92,0 | 530 | 1825 | > 60 |
| 33 | VP/PDMS-DG 40/60 | AACP 3 % | PDMS-MA 10 % | - | 90.0 | 15000 | 174 | 10 |

## Revendications

**1.** Dispersion de polymère dans un milieu organique, **caractérisée en ce qu'**elle comprend le produit de polymérisation d'au moins un monomère vinylique en présence d'un amorceur radicalaire dans un milieu de dispersion organique réactif choisi parmi les silicones comprenant au moins un groupe epoxy, de préférence au moins deux, en position (s) terminale(s).

**2.** Dispersion selon la revendication 1, **caractérisée en ce qu'**elle présente un écart entre le paramètre de solubilité du polymère ($\delta t_p$) et le paramètre de solubilité du milieu de dispersion ($\delta t_m$) satisfaisant la relation :

$$|\delta t_p - \delta t_m| \geq 4, \text{ de préférence } \geq 5$$

**3.** Dispersion selon la revendication 1 ou 2, **caractérisée en ce que** le monomère vinylique est choisi parmi les monomères de formule

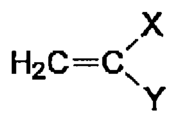

dans laquelle

- X est un radical alkyle en $C_1$-$C_{18}$, un radical aryle, de préférence phényle, en pouvant comprendre un ou plusieurs substituants alkyle en $C_1$-$C_4$, de préférence tolyle, ou un radical arylalkyle en $C_7$-$C_{10}$, de préférence benzyle, et Y représente un atome d'hydrogène ou un radical alkyle en $C_1$-$C_4$
- X est le groupe OR dans lequel R représente un radical alkyle en $C_1$-$C_{18}$ ou un radical cycloalkyle en $C_5$-$C_8$, ou un radical de formule

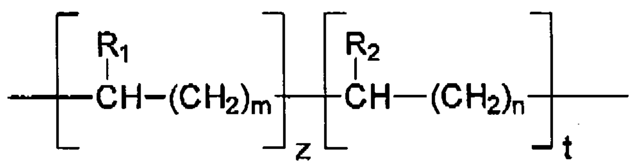

dans laquelle
$R_1$ et $R_2$ représentent un atome d'hydrogène, un radical méthyle ou un radical éthyle, $R_1$ et $R_2$ étant différents,
m et n, identiques ou différents, sont égaux à 1, 2, 3 ou 4, de préférence 3 ou 4,
z et t, identiques ou différents, sont supérieurs à 4,
z+t est inférieur ou égal à 80,
et Y représente un atome d'hydrogène ou un radical alkyle en $C_1$-$C_4$
- X est le groupe $OCOR_1$ dans lequel $R_1$ représente un radical alkyle en $C_1$-$C_{12}$, de préférence en $C_1$-$C_4$, un radical cycloalkyle en $C_5$-$C_8$, de préférence cyclohexyle, ou un radical aryle, de préférence phényle, et Y représente un atome d'hydrogène,
- X est le groupe $COOR_2$ dans lequel $R_2$ représente un radical alkyle en $C_4$-$C_{20}$, un radical cycloalkyle en $C_6$-$C_{20}$, de préférence en $C_4$-$C_{12}$, un radical aryle, de préférence phényle, ou un radical arylalkyle en $C_6$-$C_{20}$, de préférence benzyle et Y représente un atome d'hydrogène ou un radical méthyle,
- X est le groupe de formule

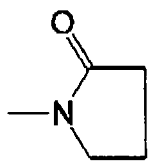

ou

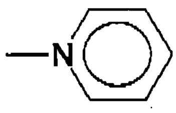

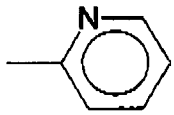

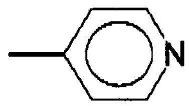

et Y représente un atome d'hydrogène.

4. Dispersion selon la revendication 3, **caractérisée en ce que** le monomère vinylique est choisi parmi l'acétate de vinyle, le propionate de vinyle, l'acrylate de butyle, l'acrylate d'octyle, l'acrylate de lauryle et la N-vinyl pyrrolidone.

5. Dispersion selon l'une des revendications 1 à 4, **caractérisée en ce que** le silicone est un poly(alkylsiloxane) à terminaison(s) glycidyle.

6. Dispersion selon la revendication 5, **caractérisée en ce que** le silicone répond à la formule

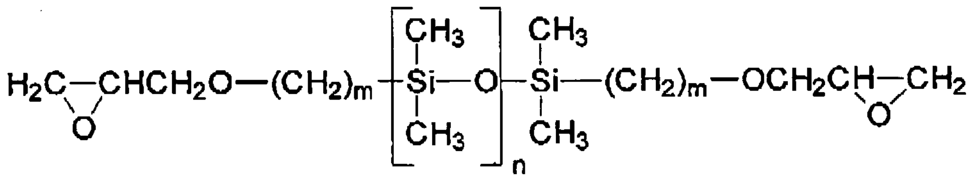

dans laquelle
n varie de 3 à 45, de préférence 10 à 30
m varie de 1 à 20.

7. Dispersion selon la revendication 5 ou 6, **caractérisée en ce que** le silicone a une masse moléculaire comprise entre 450 et 4000, de préférence entre 600 et 3000.

8. Dispersion selon l'une des revendications 1 à 7, **caractérisée en ce que** le polymère se trouve sous la forme de fines particules sensiblement sphériques de taille inférieure à 40 µm, de préférence inférieure ou égale à 15 µm, et mieux encore inférieure à 3 µm.

9. Dispersion selon la revendication 8, **caractérisée en ce que** les particules présentent une distribution en taille étroite, centrée sur un diamètre moyen compris entre 0,05 et 3 µm.

10. Dispersion selon l'une des revendications 1 à 9, **caractérisée en ce qu'**elle contient 20 à 70 % en poids de polymère, de préférence 30 à 60 % et mieux encore 40 à 60 %.

11. Dispersion selon l'une des revendications 1 à 10, **caractérisée en ce qu'**elle présente une viscosité inférieure à 500000 mPa.s, de préférence inférieure à 2000 mPa.s, et avantageusement comprise entre 30 et 1000 mPa.s.

12. Dispersion selon l'une des revendications 1 à 11, **caractérisée en ce qu'**elle comprend en outre un agent de stabilisation choisi parmi

- les copolymères d'oxyde d'alkylène, tels que les copolymères d'oxyde d'éthylène et d'oxyde de propylène,
- les polymères d'oxyde d'alkylène et d'au moins un autre monomère polymérisable, tel que le styrène et

l'acrylate ou le méthacrylate d'alkyle,
- les polymères d'alcool vinylique,
- les polymères de silicone, par exemple les poly(allcylsiloxanes) à terminaison(s) acrylique ou méthacrylique.

**13.** Procédé de préparation de la dispersion selon l'une des revendications 1 à 12 comprenant les étapes consistant à

a) mélanger au moins un monomère vinylique, un amorceur radicalaire et le milieu de dispersion organique réactif, et
b) faire réagir le mélange à une température d'au moins 20°C et inférieure au point d'ébullition du composé du mélange ayant le point d'ébullition le plus bas.

**14.** Procédé de préparation de la dispersion selon la revendication 13, **caractérisé en ce que** l'amorceur est activable thermiquement à la température de réaction, de préférence à une température inférieure d'au moins 10°C au point d'ébullition du composé du mélange ayant le point d'ébullition le plus bas.

**15.** Procédé de préparation de la dispersion selon la revendication 14, **caractérisé en ce que** l'amorceur radicalaire est choisi parmi les peroxydes, les hydroperoxydes et les composés azoïques.

**16.** Procédé de préparation de la dispersion selon l'une des revendications 13 à 15, **caractérisé en ce que** la quantité d'amorceur radicalaire représente 0,5 à 6 % en poids de monomère vinylique, de préférence 1 à 4 % en poids.

**17.** Procédé de préparation de la dispersion selon l'une des revendications 13 à 16, **caractérisé en ce que** le monomère vinylique et le milieu de dispersion sont mis en oeuvre dans un rapport volumique n'excédant pas 70:30, de préférence, compris entre 60:40 et 30:70.

**18.** Procédé de préparation de la dispersion selon l'une des revendications 13 à 17, **caractérisé en ce que** la température de réaction est supérieure ou égale à 40°C, de préférence n'excède pas 60°C.

**19.** Procédé de préparation de la dispersion selon la revendication 13, **caractérisé en ce que** l'on utilise un amorceur redox et que la température de réaction n'excède pas 40°C, de préférence n'excède pas 30°C.

**20.** Procédé de préparation de la dispersion selon l'une des revendications 13 à 19, **caractérisé en ce que** l'on ajoute au mélange de l'étape a) un agent de stabilisation dans une proportion pouvant aller jusqu'à 35 % en poids de monomère vinylique, de préférence jusqu'à 20 %.

**21.** Composition d'ensimage destinée à revêtir des filaments de verre, **caractérisée en ce qu'**elle comprend une dispersion selon l'une des revendications 1 à 12.

**22.** Composition d'apprêt destinée à revêtir des fils de verre ou un assemblage de fils de verre, **caractérisée en ce qu'**elle comprend une dispersion selon l'une des revendications 1 à 12.

**23.** Fil de verre comprenant des filaments de verre revêtus de la composition d'ensimage selon la revendication 21.

**24.** Fil de verre ou assemblage de fil de verre, notamment sous forme de grille ou de tissu, revêtu d'une composition d'apprêt selon la revendication 22.

## Claims

**1.** A polymer dispersion in an organic medium, **characterized in that** it comprises the product from the polymerization of at least one vinyl monomer in the presence of a radical initiator in a reactive organic dispersing medium chosen from the silicones comprising at least one epoxy group, preferably at least two, in terminal position(s).

**2.** The dispersion as claimed in claim 1, **characterized in that** it exhibits a difference between the solubility parameter of the polymer ($\delta t_p$) and the solubility parameter of the dispersing medium ($\delta t_m$) which satisfies the relationship:

$$|\delta t_p - \delta t_m| \geq 4, \text{ preferably } \geq 5$$

**3.** The dispersion as claimed in claim 1 or 2, **characterized in that** the vinyl monomer is chosen from the monomers of formula

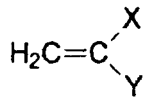

in which

- X is a $C_1$-$C_{18}$ alkyl radical, an aryl radical, preferably the phenyl radical, which can comprise one or more $C_1$-$C_4$ alkyl substituents, preferably the tolyl radical, or a $C_7$-$C_{10}$ arylalkyl radical, preferably the benzyl radical, and Y represents a hydrogen atom or a $C_1$-$C_4$ alkyl radical,
- X is the OR group in which R represents a $C_1$-$C_{18}$ alkyl radical or a $C_5$-$C_8$ cycloalkyl radical, or a radical of formula

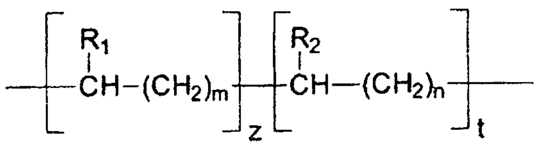

in which
$R_1$ and $R_2$ represent a hydrogen atom, a methyl radical or an ethyl radical, $R_1$ and $R_2$ being different,
m and n, which are identical or different, are equal to 1, 2, 3 or 4, preferably 3 or 4,
z and t, which are identical or different, are greater than 4,
z + t is less than or equal to 80,
and Y represents a hydrogen atom or a $C_1$-$C_4$ alkyl radical,

- X is the $OCOR_1$ group in which $R_1$ represents a $C_1$-$C_{12}$, preferably $C_1$-$C_4$, alkyl radical, a $C_5$-$C_8$ cycloalkyl radical, preferably the cyclohexyl radical, or an aryl radical, preferably the phenyl radical, and Y represents a hydrogen atom,
- X is the $COOR_2$ group in which $R_2$ represents a $C_4$-$C_{20}$ alkyl radical, a $C_6$-$C_{20}$, preferably $C_4$-$C_{12}$, cycloalkyl radical, an aryl radical, preferably the phenyl radical, or a $C_6$-$C_{20}$ arylalkyl radical, preferably the benzyl radical, and Y represents a hydrogen atom or a methyl radical,
- X is the group of formula

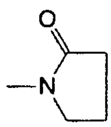

or

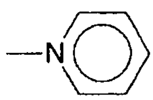

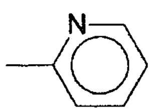

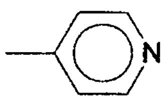

and Y represents a hydrogen atom.

**4.** The dispersion as claimed in claim 3, **characterized in that** the vinyl monomer is chosen from vinyl acetate, vinyl

propionate, butyl acrylate, octyl acrylate, lauryl acrylate and N-vinylpyrrolidone.

5. The dispersion as claimed in one of claims 1 to 4, **characterized in that** the silicone is a poly-(alkylsiloxane) comprising glycidyl ending(s).

6. The dispersion as claimed in claim 5, **characterized in that** the silicone has the following formula

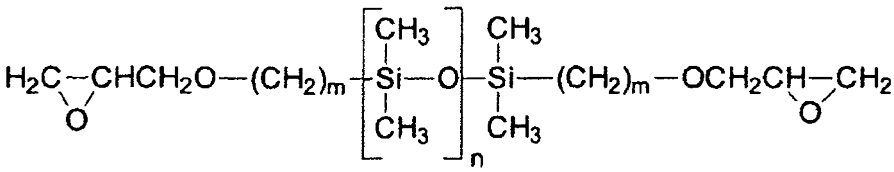

in which
n varies from 3 to 45, preferably 10 to 30
m varies from 1 to 20.

7. The dispersion as claimed in claim 5 or 6, **characterized in that** the silicone has a molecular weight of between 450 and 4000, preferably between 600 and 3000.

8. The dispersion as claimed in one of claims 1 to 7, **characterized in that** the polymer is found in the form of fine substantially spherical particles with a size of less than 40 μm, preferably of less than or equal to 15 μm and better still of less than 3 μm.

9. The dispersion as claimed in claim 8, **characterized in that** the particles exhibit a narrow size distribution centered on a mean diameter of between 0.05 and 3 μm.

10. The dispersion as claimed in one of claims 1 to 9, **characterized in that** it comprises 20 to 70% by weight of polymer, preferably 30 to 60% and better still 40 to 60%.

11. The dispersion as claimed in one of claims 1 to 10, **characterized in that** it exhibits a viscosity of less than 500 000 mPa·s, preferably of less than 2000 mPa·s and advantageously of between 30 and 1000 mPa·s.

12. The dispersion as claimed in one of claims 1 to 11, **characterized in that** it additionally comprises a stabilizing agent chosen from

- alkylene oxide copolymers, such as copolymers of ethylene oxide and of propylene oxide,
- polymers of alkylene oxide and of at least one other polymerizable monomer, such as styrene and alkyl acrylate or methacrylate,
- vinyl alcohol polymers,
- silicone polymers, for example poly(alkyl-siloxane)s comprising acrylic or methacrylic ending(s).

13. A process for the preparation of the dispersion as claimed in one of claims 1 to 12, comprising the stages consisting in

a) mixing at least one vinyl monomer, one radical initiator and one reactive organic dispersing medium, and
b) reacting the mixture at a temperature of at least 20°C and lower than the boiling point of the compound in the mixture having the lowest boiling point.

14. The process for the preparation of the dispersion as claimed in claim 13, **characterized in that** the initiator can be activated thermally at the reaction temperature, preferably at a temperature lower by at least 10°C than the boiling point of the compound in the mixture having the lowest boiling point.

15. The process for the preparation of the dispersion as claimed in claim 14, **characterized in that** the radical initiator is chosen from peroxides, hydroperoxides and azo compounds.

16. The process for the preparation of the dispersion as claimed in one of claims 13 to 15, **characterized in that** the

amount of radical initiator represents 0.5 to 6% by weight of vinyl monomer, preferably 1 to 4% by weight.

**17.** The process for the preparation of the dispersion as claimed in one of claims 13 to 16, **characterized in that** the vinyl monomer and the dispersing medium are employed in a ratio by volume not exceeding 70:30, preferably between 60:40 and 30:70.

**18.** The process for the preparation of the dispersion as claimed in one of claims 13 to 17, **characterized in that** the reaction temperature is greater than or equal to 40°C and preferably does not exceed 60°C.

**19.** The process for the preparation of the dispersion as claimed in claim 13, **characterized in that** a redox initiator is used and **in that** the reaction temperature does not exceed 40°C and preferably does not exceed 30°C.

**20.** The process for the preparation of the dispersion as claimed in one of claims 13 to 19, **characterized in that** a stabilizing agent is added to the mixture of stage a) in a proportion which can range up to 35% by weight of vinyl monomer, preferably up to 20%.

**21.** A sizing composition intended to coat glass filaments, **characterized in that** it comprises a dispersion as claimed in one of claims 1 to 12.

**22.** A coating composition intended to coat glass strands or an assemblage of glass strands, **characterized in that** it comprises a dispersion as claimed in one of claims 1 to 12.

**23.** A glass strand comprising glass filaments which are coated with the sizing composition as claimed in claim 21.

**24.** A glass strand or an assemblage of glass strands, in particular in the grid or woven fabric form, coated with a coating composition as claimed in claim 22.

**Patentansprüche**

**1.** Polymerdispersion in einem organischen Medium, **dadurch gekennzeichnet, dass** sie das Polymerisationsprodukt wenigstens eines Vinylmonomers in Gegenwart eines radikalischen Initiators in einem reaktiven, organischen Dispersionsmedium, ausgewählt aus Silikonen, die wenigstens eine Epoxygruppe, vorzugsweise wenigstens zwei, in terminaler (terminalen) Stellung(en) aufweisen, umfasst.

**2.** Dispersion nach Anspruch 1, **dadurch gekennzeichnet, dass** sie eine Abweichung zwischen dem Löslichkeitsparameter des Polymers ($\delta t_p$) und dem Löslichkeitsparameter des Dispersionsmedium ($\delta t_m$) aufweist, die folgende Beziehung erfüllt:

$$\left| \delta t_p - \delta t_m \right| \geq 4, \text{ vorzugsweise} \geq 5$$

**3.** Dispersion nach Anspruch 1 oder 2, **dadurch gekennzeichnet, dass** das Vinylmonomer aus den Monomeren folgender Formel ausgewählt ist

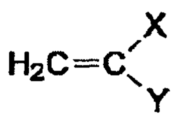

worin

- X ein $C_1$-$C_{18}$-Alkylradikal, ein Arylradikal, vorzugsweise Phenyl, das einen oder mehrere $C_1$-$C_4$-Alkylsubstituenten, vorzugsweise Tolyl umfassen kann, oder ein $C_7$-$C_{10}$-Arylalkylradikal, vorzugweise Benzyl, ist und Y ein Wasserstoffatom oder ein $C_1$-$C_4$-Alkylradikal darstellt,

- X die OR-Gruppe ist, worin R ein $C_1$-$C_{18}$-Alkylradikal oder ein $C_5$-$C_8$-Cycloalkylradikal darstellt, oder ein Radikal der Formel

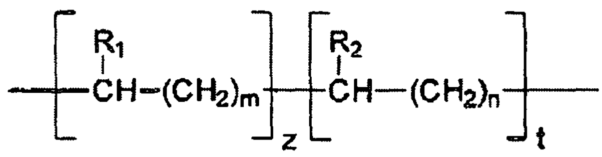

worin
$R_1$ und $R_2$ ein Wasserstoffatom, ein Methylradikal oder ein Ethylradikal darstellen, wobei $R_1$ und $R_2$ unterschiedlich sind,
m und n, die identisch oder unterschiedlich sind, gleich 1, 2, 3 oder 4, vorzugsweise 3 oder 4 sind,
z und t, die identisch oder unterschiedlich sind, größer als 4 sind,
z+t kleiner oder gleich 80 ist,
und Y ein Wasserstoffatom oder ein $C_1$-$C_4$-Alkylradikal darstellt,
- X die $OCOR_1$-Gruppe ist, worin $R_1$ ein $C_1$-$C_{12}$-, vorzugsweise $C_1$-$C_4$-Alkylradikal, ein $C_5$-$C_8$-Cycloalkylradikal, vorzugsweise Cyclohexyl, oder ein Arylradikal, vorzugsweise Phenyl darstellt und Y ein Wasserstoffatom darstellt,
- X die $COOR_2$-Gruppe ist, worin $R_2$ ein $C_4$-$C_{20}$-Alkylradikal, ein $C_6$-$C_{20}$-, vorzugsweise $C_4$-$C_{12}$-Cycloalkylradikal, ein Arylradikal, vorzugsweise Phenyl, oder ein $C_6$-$C_{20}$-Arylalkylradikal, vorzugsweise Benzyl darstellt und Y ein Wasserstoffatom oder ein Methylradikal darstellt,
- X die Gruppe folgender Formel ist

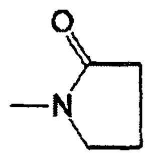

oder

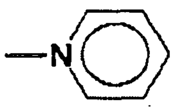

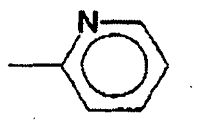

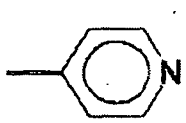

und Y ein Wasserstoffatom darstellt.

4. Dispersion nach Anspruch 3, **dadurch gekennzeichnet, dass** das Vinylmonomer aus Vinylacetat, Vinylpropionat, Butylacrylat, Octylacrylat, Laurylacrylat und N-Vinyl-Pyrrolidon ausgewählt ist.

5. Dispersion nach einem der Ansprüche 1 bis 4, **dadurch gekennzeichnet, dass** das Silikon ein Glycidyl-terminiertes Poly(alkylsiloxan) ist.

6. Dispersion nach Anspruch 5, **dadurch gekennzeichnet, dass** das Silikon folgender Formel entspricht

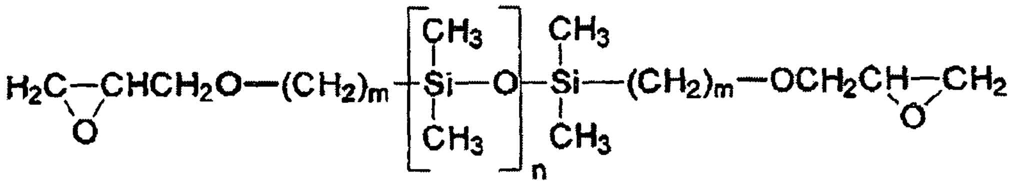

worin
n zwischen 3 und 45, vorzugsweise 10 und 30 variiert,
m zwischen 1 und 20 variiert.

**7.** Dispersion nach Anspruch 5 oder 6, **dadurch gekennzeichnet, dass** das Silikon eine Molekularmasse im Bereich zwischen 450 und 4000, vorzugsweise zwischen 600 und 3000 aufweist.

**8.** Dispersion nach einem der Ansprüche 1 bis 7, **dadurch gekennzeichnet, dass** das Polymer in Form von feinen, im Wesentlichen kugelförmigen Teilchen mit einer Größe von weniger als 40 μm, vorzugsweise von weniger als oder gleich 15 μm und besser noch von weniger als 3 μm aufweist.

**9.** Dispersion nach Anspruch 8, **dadurch gekennzeichnet, dass** die Teilchen eine enge Größenverteilung, um einen mittleren Durchmesser zwischen 0,05 und 3 μm herum aufweisen.

**10.** Dispersion nach einem der Ansprüche 1 bis 9, **dadurch gekennzeichnet, dass** sie 20 bis 70 Gew.-% Polymer, vorzugsweise 30 bis 60 % und besser noch 40 bis 60 % enthält.

**11.** Dispersion nach einem der Ansprüche 1 bis 10, **dadurch gekennzeichnet, dass** sie eine Viskosität von weniger als 500000 mPa.s, vorzugsweise von weniger als 2000 mPa.s und vorteilhafterweise im Bereich zwischen 30 und 1000 mPa.s aufweist.

**12.** Dispersion nach einem der Ansprüche 1 bis 11, **dadurch gekennzeichnet, dass** sie ferner ein Stabilisierungsmittel umfasst, welches ausgewählt ist aus

- den Alkylenoxidcopolymeren, wie den Ethylenoxid- und Propylenoxidcopolymeren,
- den Polymeren aus Alkylenoxid und wenigstens einem weiteren polymerisierbaren Monomer, wie Styrol und Acrylat oder Alkylmethacrylat,
- den Vinylalkoholpolymeren,
- den Silikonpolymeren, beispielsweise den Acryl- oder Methacrylterminierten Poly(alkylsiloxanen).

**13.** Verfahren zur Herstellung der Dispersion nach einem der Ansprüche 1 bis 12, das die Schritte umfasst, die darin bestehen

a) wenigstens ein Vinylmonomer, einen radikalischen Initiator und das reaktive, organische Dispersionsmedium zu mischen und
b) das Gemisch bei einer Temperatur von wenigstens 20 °C und unterhalb des Siedepunktes der Verbindung des Gemischs, welche den niedrigsten Siedepunkt hat, reagieren zu lassen.

**14.** Verfahren zur Herstellung der Dispersion nach Anspruch 13, **dadurch gekennzeichnet, dass** der Initiator bei der Reaktionstemperatur, vorzugsweise bei einer Temperatur, die um wenigstens 10 °C unter dem Siedepunkt der Verbindung des Gemischs liegt, welche den niedrigsten Siedepunkt hat, wärmeaktivierbar ist.

**15.** Verfahren zur Herstellung der Dispersion nach Anspruch 14, **dadurch gekennzeichnet, dass** der radikalische Initiator aus den Peroxiden, den Hydroperoxiden und den Azoverbindungen ausgewählt ist.

**16.** Verfahren zur Herstellung der Dispersion nach einem der Ansprüche 13 bis 15, **dadurch gekennzeichnet, dass** die Menge an radikalischem Initiator 0,5 bis 6 Gew.-% Vinylmonomer, vorzugsweise 1 bis 4 Gew.-% beträgt.

**17.** Verfahren zur Herstellung der Dispersion nach einem der Ansprüche 13 bis 16, **dadurch gekennzeichnet, dass**

das Vinylmonomer und das Dispersionsmedium in einem Volumenverhältnis verwendet werden, das 70 : 30 nicht überschreitet, vorzugsweise zwischen 60 : 40 und 30 : 70 liegt.

**18.** Verfahren zur Herstellung der Dispersion nach einem der Ansprüche 13 bis 17, **dadurch gekennzeichnet, dass** die Reaktionstemperatur größer oder gleich 40 °C ist, vorzugsweise 60 °C nicht überschreitet.

**19.** Verfahren zur Herstellung der Dispersion nach Anspruch 13, **dadurch gekennzeichnet, dass** ein Redox-Initiator verwendet wird und dass die Reaktionstemperatur 40 °C, vorzugsweise 30 °C nicht überschreitet.

**20.** Verfahren zur Herstellung der Dispersion nach einem der Ansprüche 13 bis 19, **dadurch gekennzeichnet, dass** dem Gemisch bei Schritt a) ein Stabilisierungsmittel in einem Anteil von bis zu 35 Gew.-% Vinylmonomer, vorzugsweise bis zu 20 % zugegeben wird.

**21.** Schmälzzusammensetzung, die dazu bestimmt ist, Glasfilamente damit zu überziehen, **dadurch gekennzeichnet, dass** sie eine Dispersion nach einem der Ansprüche 1 bis 12 umfasst.

**22.** Appreturzusammensetzung, die dazu bestimmt ist, Glasfäden oder eine Ansammlung von Glasfäden damit zu überziehen, **dadurch gekennzeichnet, dass** sie eine Dispersion nach einem der Ansprüche 1 bis 12 umfasst.

**23.** Glasfaden, der mit der Schmälzzusammensetzung nach Anspruch 21 überzogene Glasfilamente umfasst.

**24.** Glasfaden oder Ansammlung von Glasfäden, insbesondere in Form eines Gitters oder Gewebes, der bzw. die mit einer Appreturzusammensetzung nach Anspruch 22 überzogen ist.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **D. W. VAN KREVELEN.** Properties of polymers. Elsevier Science Publisher, 1990, 212-213